# EUROPÄISCHE PATENTANMELDUNG

(11) **EP 4 772 417 A2**
(43) Veröffentlichungstag der Anmeldung: **08.07.2026**
(21) Anmeldenummer: 25219645.6
(22) Anmeldetag: 01.12.2025
(51) Int. Cl.: B62B 3/14

(54) **DISPLAYIMPLEMENTIERUNG**

(30) Priorität: 13.12.2024 DE 102024137623; 20.12.2024 DE 202024107478 U
(71) Anmelder: Wanzl GmbH & Co. KGaA, 89340 Leipheim (DE)
(72) Erfinder: Riesenegger, Markus, 89358 Kammeltal (DE); Gasche, Thomas, 89340 Leipheim (DE); Weniger, Stefanie, 86391 Stadtbergen (DE); Käsbohrer, Christian, 89415 Lauingen (DE); Philipp, Benedikt, 89407 Dillingen (DE); Engelmohr, Marcel, 89434 Jettingen-Scheppach (DE)

(57) **Zusammenfassung**

Die Erfindung bezieht sich auf einen Einkaufswagen mit einer Aufnahmestruktur die einen zur Aufnahme von Waren vorgesehenen Aufnahmebereich definiert, einem Fahrgestell, das die Aufnahmestruktur trägt, einer Griffeinrichtung zur Bereitstellung eines ersten und eines zweiten, jeweils manuell aufgreifbaren Griffabschnitts und einer Displayeinrichtung zur Wiedergabe von Bildinformationen, wobei die Displayeinrichtung als transparente Struktur in Form eines Scheibenkörpers ausgebildet und derart angeordnet ist, dass diese einen Durchblick in den Aufnahmebereich ermöglicht. Weiterhin bezieht sich die Erfindung auch auf eine Griffeinrichtung für einen derartigen Einkaufswagen. Weiterhin bezieht sich die Erfindung auch auf ein Bake-Off Modul, eine Wagenstation und eine Gateeinrichtung die jeweils transparente Scheibenkörper umfassen, welche als holografisches Display fungieren.

## Beschreibung

Die Erfindung befasst sich mit der Implementierung einer Displayeinrichtung in eine für einen Warenerwerb vorgesehene Umgebung, insbesondere zur Unterstützung einer Kundenführung im Rahmen des Warenerwerbs.

Der Erfindung liegt die Aufgabe zugrunde, Lösungen zu schaffen, durch welche sich im Rahmen des Warenerwerbs in einer hierzu vorgesehenen Umgebung eine verbesserte Zugänglichkeit zu Informationen für den jeweiligen Kunden ergibt.

Gemäß einem ersten Aspekt der vorliegenden Erfindung richtet sich die Erfindung hierbei auf eine Lösung durch welche sich für einen Anwender in Verbindung mit dem Einsatz eines Einkaufswagens Vorteile gegenüber bislang eingesetzten Konstruktionen ergeben. Ein erster Lösungsansatz betrifft hierbei einen Einkaufswagen mit einer Aufnahmestruktur, die einen zur Aufnahme von Waren vorgesehenen Aufnahmebereich definiert, einem Fahrgestell, das die Aufnahmestruktur trägt, einer Griffeinrichtung zur Bereitstellung eines ersten und eines zweiten, jeweils manuell aufgreifbaren Griffabschnitts und einer Displayeinrichtung zur Wiedergabe von Bildinformationen. Weiterhin bezieht sich die Erfindung auch auf eine Griffeinrichtung für einen derartigen Einkaufswagen. Erfindungsgemäß ist bei einem derartigen Einkaufswagen die Displayeinrichtung als transparente Struktur in Form eines Scheibenkörpers ausgebildet und derart angeordnet, dass diese einen Durchblick in den Aufnahmebereich des Einkaufswagens hinein ermöglicht.

Dadurch wird es auf vorteilhafte Weise möglich, einem Anwender im Rahmen der Nutzung eines Einkaufswagens wechselnde Bildinhalte in einem Bereich zu visualisieren der bislang der Betrachtung der im Einkaufswagen abgelegten Waren vorbehalten war.

Gemäß einem besonderen Aspekt der vorliegenden Erfindung ist die Displayeinrichtung als holographisches Display ausgebildet. Die Displayeinrichtung befindet sich dabei vorzugsweise in einem Zwischenbereich zwischen der ersten und der zweiten Griffeinrichtung.

Die erste und die zweite Griffeinrichtung sind vorzugsweise an einen Trägerkörper angebunden insbesondere indem diese einstückig mit diesem ausgebildet sind. Dieser Trägerkörper trägt gemäß einem besonderen Aspekt der vorliegenden Erfindung auch die Displayeinrichtung und bildet ein Gehäuse für die für den Betrieb der Displayeinrichtung erforderlichen Komponenten, insbesondere Spiegel und Projektionsorgane.

Die Displayeinrichtung ist vorzugsweise in einer Ausrichtung in den Einkaufswagen eingebunden, in welcher eine durch das Flächenzentrum des Displays verlaufende und zur Displayhauptebene senkrechte Achse eine Ausrichtung aufweist, die bei gebrauchsüblichem Aufgriff der Griffeinrichtung durch einen Anwender durchschnittlicher Größe dessen Kopfbereich erfasst. Die Displayeinrichtung ist hierbei beispielsweise gegenüber einer Horizontalebene in einer Neigung im Bereich von 30 bis 60° angeordnet. Es ist möglich, die Displayeinrichtung so in die Griffeinrichtung einzubinden oder auch die Griffeinrichtung bewegbar, insbesondere kippbar zu führen, dass die Ausrichtung der Displayeinrichtung einstellbar veränderbar ist.

Der Einkaufswagen umfasst vorzugsweise eine Schaltungseinrichtung und eine durch diese angesteuerte Projektionseinrichtung, d.h. diese Komponenten sind in den Einkaufswagen und hierbei wiederum in eine auch die Griffeinrichtung bildende oder umfassende Baugruppe eingebunden. Die Einbindung der Schaltungseinrichtung und/oder der Projektionseinrichtung in den Einkaufswagen wird damit durch eine die Griffeinrichtung tragende oder bereitstellende Struktur bewerkstelligt.

Der Einkaufswagen kann so ausgebildet sein, dass dieser eine Pfandschlosseinrichtung umfasst und dass ein Interaktionsvorgang zur Freigabe der Pfandschlosseinrichtung oder zur Pfandrückgabe in Verbindung mit der Displayeinrichtung visuell unterstützt wird. Diesbezüglich wird auf die deutsche Patentanmeldung DE... verwiesen deren Inhalt in die vorliegende Anmeldung durch diese Bezugnahme vollumfänglich mit eingebunden wird.

Der Einkaufswagen kann weiterhin derart ausgebildet sein, dass dieser eine Smartphone-Aufnahmeeinrichtung bereitstellt, zur Aufnahme eines Smartphones im Bereich der Griffeinrichtung wobei hierbei wiederum vorzugsweise eine Schnittstelleneinrichtung vorgesehen ist, zur Abstimmung von Bildinhalten die über die Displayeinrichtung wiedergegeben werden in Verbindung mit einem Signaltransfer zu und von dem Smartphone.

Über die Displayeinrichtung kann eine Wiedergabe von Bildinhalten bewerkstelligt werden, die eine Augmented-Reality Funktion bietet im Zusammenspiel mit den im Warenaufnahmebereich aufgenommenen Waren oder der Raumgeometrie des Warenaufnahmebereiches.

Über die Displayeinrichtung kann weiterhin auch eine Navigationsunterstützung zum Auffinden von Waren bewerkstelligt werden. Über die Displayeinrichtung können auch Funktionen zur Abwicklung eines Self-Checkouts bereitgestellt werden.

Die Einkoppelung der Bildinhalte in die Displayeinrichtung kann durch Einkoppelung von Bildinhalten oder Licht in einen Randseitenbereich der Displayeinrichtung bewerkstelligt werden. Alternativ hierzu oder auch in Kombination mit dieser Maßnahme kann die Einkoppelung der Bildinhalte in die Displayeinrichtung auch durch eine Projektionseinrichtung bewerkstelligt werden, die insbesondere eine Spiegeloptik umfasst.

Gemäß einem zweiten Aspekt der vorliegenden Erfindung wird die eingangs angegebene Aufgabe auch gelöst durch eine Griffeinrichtung für einen Einkaufswagen mit einem ersten Griffabschnitt, einem zweiten Griffabschnitt, einem Trägerkörper der die beiden Griffabschnitte trägt und einer Displayeinrichtung die sich in einem Zwischenbereich zwischen den beiden Griffabschnitten erstreckt, wobei die Displayeinrichtung durch einen transparenten Scheibenkörper gebildet ist, der einen Durchblick in einen Warenaufnahmebereich des Einkaufswagens gestattet. Der Scheibenkörper bildet hierbei vorzugsweise Bestandteil eines holgraphischen Displays. Der Scheibenkörper kann derart an der Griffeinrichtung gehalten sein, dass ein Randbereich desselben, vorzugsweise der überwiegende Teil des Randbereiches frei liegt. Das im Display wiedergegebenen Bild schwebt damit rahmenlos im Zwischenbereich zwischen dem Anwender und dem Warenaufnahmebereich des Einkaufswagens.

Gemäß einem dritten Aspekt der vorliegenden Erfindung richtet sich die Erfindung hierbei auf eine Lösung durch welche sich Vorteile für einen Kunden in Verbindung mit dem Einsatz eine Fachsystems insbesondere eines sog. Bake-Off Moduls ergeben durch welches in frontal einsehbaren Fächern Waren, insbesondere Backwaren zur Entnahme durch einen Anwender bereitgehalten werden.

Ein hierauf gerichteter Lösungsansatz betrifft ein Bake-Off Modul, d.h. ein Fachsystem zur Bereitstellung von Backwaren in frontal zugänglichen Warenfächern die jeweils mit einer Deckeleinrichtung verschließbar sind, die von einem Kunden in eine Offenstellung bringbar sind, wobei diese Deckeleinrichtungen und/oder an diese angrenzende Abschnitte eine Displayeinrichtung bilden, zur Wiedergabe von Bildinformationen. Erfindungsgemäß bildet bei diesem Bake-Off Modul die jeweils einem Warenfach zugeordnete Displayeinrichtung eine transparente Struktur in Form eines Scheibenkörpers und ist derart angeordnet, dass diese einen Durchblick in den Innenbereich eines Warenfaches ermöglicht.

Die jeweilige Displayeinrichtung kann dabei mit Inhalten bespielt werden, die Werbung oder Hinweise zum jeweiligen Produkt oder anderweitig ansprechende Inhalte darstellen.

Ein Bake-Off Modul kann als Fachsystem ausgebildet sein, das mehrere nebeneinanderliegend sowie übereinanderliegend angeordnete Fächer aufweist, die durch Trennwände voneinander getrennt sind und auf einer einem Anwender zugänglichen Systemseite Fachdeckel aufweisen die manuell oder automatisiert in eine Offenstellung verbringbar sind und dabei einen Zugriff zu dem Innenbereich des jeweiligen Warenfaches oder ein Hineingreifen mit einem Entnahmehilfsmittel wie z.B. einer Gebäckzange ermöglichen. Insbesondere im oberen Bereich des jeweiligen Warenfaches kann eine schmale Scheibenstruktur angeordnet sein, die als holografisches und insgesamt transparentes Display fungiert. Die Einkoppelung der Bildinhalte kann durch eine Projektionseinrichtung und ggf. eine Spiegeloptik erfolgen, wobei der Projektionsweg so gewählt ist, dass dieser bei üblicher Füllung der Warenfächer nicht von den darin liegenden Waren, insbesondere Gebäckstücken unterbrochen wird. Die Projektionseinrichtung und/oder die Spiegeloptik kann sich insoweit insbesondere im Dachbereich des jeweiligen Warenfaches befinden und hierbei eine Projektion holografischer Bildinhalte auf die Rückseite der jeweiligen Fachklappe oder Abdeckleiste d.h. auf die dem Anwender abgewandte Rückseite der Fachklappe oder Abdeckleiste "von schräg oben her" vornehmen.

Gemäß einem vierten Aspekt der vorliegenden Erfindung richtet sich diese auf eine Lösung durch welche sich Vorteile für einen Kunden in Verbindung mit dem Einsatz eines Einkaufswagens ergeben, der zunächst in einer Wagenstation oder Parkbox, beispielsweise auf einem Kunden-Parkplatz bereitgestellt wird, wobei diese Wagenstation eine überdachte und an wenigstens einer Seite von einer Seitenwandung begrenzte Umhausung darstellt.

Ein hierauf gerichteter Lösungsansatz betrifft eine Wagenstation, d.h. eine überdachte und wenigstens einseitig von einer Seitenwandung begrenzte Umhausung zur Bereitstellung von Einkaufswagen, wobei die Seitenwandung dieser Wagenstation zumindest partiell eine Displayeinrichtung bildet, zur Wiedergabe von Bildinformationen. Erfindungsgemäß bildet bei dieser Wagenstation die wenigstens eine Seitenwandung zumindest abschnittsweise eine holografische Displayeinrichtung. Die Seitenwandung bildet hierbei eine transparente Struktur in Form eines Scheibenkörpers und ist derart angeordnet, dass diese von außen her einen Durchblick in den Abstellbereich der Einkaufswagen ermöglicht.

Die Einkoppelung der Bildinhalte in diese Seitenwandung der Wagenstation kann dabei insbesondere durch eine Projektionseinrichtung bewerkstelligt werden, die im Dachbereich der Wagenstation und hierbei im Innenberiech, d.h. unter dem Dach angeordnet ist und hierbei eine Projektion auf die Innenseite der Seitenwandung ermöglicht.

Gemäß einem fünften Aspekt der vorliegenden Erfindung richtet sich diese auf eine Lösung durch welche sich Vorteile für einen Kunden in Verbindung mit dem Einsatz eines Gatesystems ergeben durch welches eine Zugang zu einem Verkaufsbereich oder ein Herausgehen aus dem Verkaufs- oder Bezahlbereich koordiniert werden kann, wobei dieses Gatesystem ein Sperrorgan in Form einer Platteneinrichtung umfasst die in eine Sperrstellung und in eine Freigabestellung bringbar, insbesondere um eine vertikale Achse schwenkbar ist.

Ein hierauf gerichteter Lösungsansatz betrifft eine Gateeinrichtung mit einem plattenartigen Sperrorgan, wobei dieses Sperrorgan zumindest partiell eine Displayeinrichtung bildet, zur Wiedergabe von Bildinformationen. Erfindungsgemäß bildet bei dieser Gateeinrichtung das Sperrorgan eine platten- oder scheibenartige Fläche die zumindest abschnittsweise eine holografische Displayeinrichtung bildet. Das Sperrorgan bildet hierbei eine transparente Struktur in Form eines Scheibenkörpers. Das Sperrorgan ermöglicht hierbei einen Durchblick auf den Abschnitt des dem Anwender bezüglich des Sperrorgans abgewandten Abschnitt des Durchgangsweges.

Die Einkoppelung der holografischen Bildinhalte in dieses Sperrorgan kann hierbei wiederum insbesondere durch eine Projektionseinrichtung bewerkstelligt werden, die in die Gateeinrichtung integriert ist oder zu dieser derart positioniert ist, dass durch diese eine Projektion holografischer Bildinhalte auf das Sperrorgan ermöglicht wird.

### Kurzbeschreibung der Figuren

Weitere Einzelheiten und Merkmale der Erfindung ergeben sich aus der nachfolgenden Beschreibung in Verbindung mit der Zeichnung. Es zeigt:

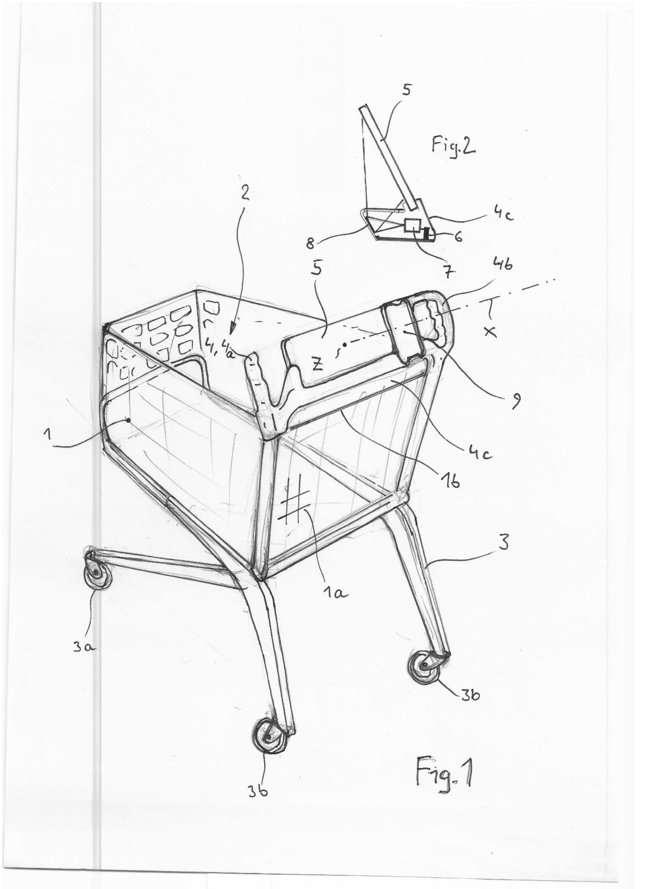

- Figur 1: eine perspektivische Darstellung eines erfindungsgemäßen Einkaufswagens mit einem volltransparenten Display das den Durchblicksbereich zwischen Anwender und dem Warenaufnahmebereich des Einkaufswagens durchquert;
- Figur 2: eine Skizze zur Veranschaulichung des Aufbaus des Displays als holographisches Display;

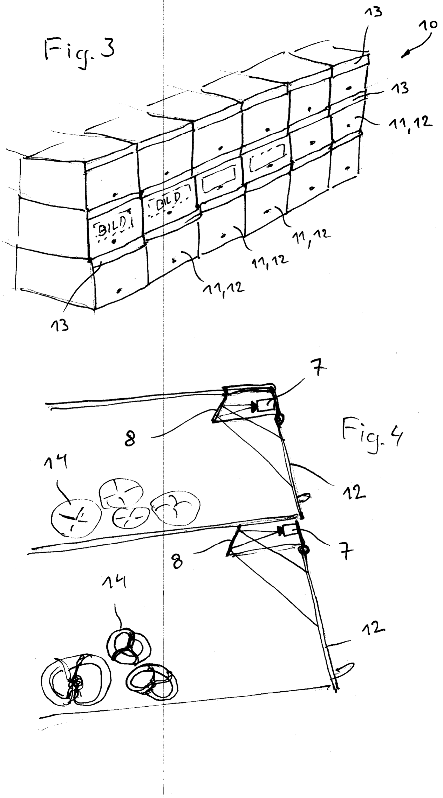

- Figur 3: eine Skizze zur Veranschaulichung des Aufbaus eines Fachsystems insbesondere eines sog. Bake-Off Moduls durch welches in frontal einsehbaren Fächern Waren, insbesondere Backwaren zur Entnahme durch einen Anwender bereitgehalten werden, wobei die Warenfächer jeweils mit einer Deckeleinrichtung verschließbar sind die von einem Kunden in eine Offenstellung bringbar sind und diese Deckeleinrichtungen und/oder an diese angrenzende Abschnitte jeweils eine holographische Displayeinrichtung bilden;
- Figur 4: eine Skizze zur Veranschaulichung des Aufbaus des Bake-Off Moduls nach Figur 3, bei welchem die jeweils einem Warenfach zugeordnete Displayeinrichtung eine transparente Struktur in Form eines Scheibenkörpers bildet und derart angeordnet ist, dass diese einen Durchblick in den Innenbereich eines Warenfaches ermöglicht;

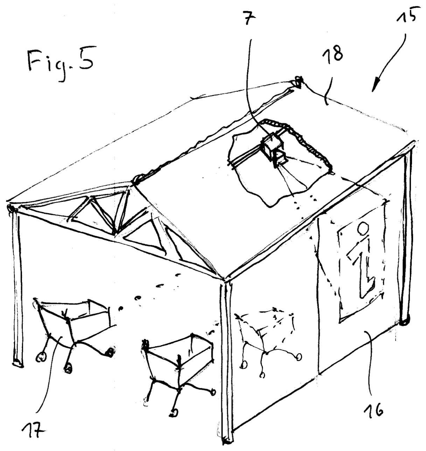

- Figur 5: eine Skizze zur Veranschaulichung des Aufbaus einer Wagenstation für Einkaufswagen, die beispielsweise auf einem Parkplatz bereitgestellt wird, wobei diese Wagenstation eine überdachte und an wenigstens einer Seite von einer Seitenwandung begrenzte Umhausung bereitstellt und die Seitenwandung dieser Wagenstation zumindest partiell eine Displayeinrichtung bildet, zur Wiedergabe von Bildinformationen;

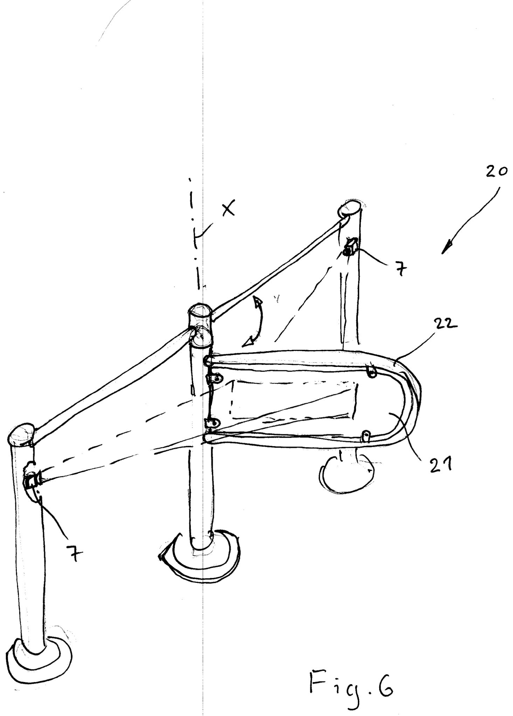

- Figur 6: eine Skizze zur Veranschaulichung des Aufbaus eines Gatesystems durch welches ein Zugang zu einem Verkaufsbereich oder ein Herausgehen aus dem Verkaufs- oder einem Bezahlbereich koordiniert werden kann, wobei dieses Gatesystem ein Sperrorgan in Form einer Platteneinrichtung umfasst, die in eine Sperrstellung und in eine Freigabestellung bringbar, insbesondere um eine vertikale Achse schwenkbar ist und die Platteneinrichtung hierbei eine Fläche bereitstellt, die zumindest abschnittsweise eine holografische Displayeinrichtung bildet.

Die Darstellung nach Figur 1 veranschaulicht den Aufbau eines erfindungsgemäßen Einkaufswagens. Dieser Einkaufswagen umfasst eine Aufnahmestruktur 1, die einen zur Aufnahme von Waren vorgesehenen Aufnahmebereich 2 definiert, ein Fahrgestell 3, das die Aufnahmestruktur 1 trägt, eine Griffeinrichtung 4 zur Bereitstellung eines ersten und eines zweiten, jeweils manuell aufgreifbaren Griffabschnitts 4a, 4b und eine Displayeinrichtung 5 zur Wiedergabe von Bildinformationen. Die Displayeinrichtung ist als transparente Struktur in Form eines Scheibenkörpers ausgebildet und derart angeordnet, dass diese einen Durchblick in den Aufnahmebereich ermöglicht.

Bei dem dargestellten erfindungsgemäßen Einkaufswagen ist die Displayeinrichtung 5 als holographisches Display ausgebildet. Die Displayeinrichtung 5 erstreckt sich in einem Zwischenbereich zwischen der ersten und der zweiten Griffeinrichtung 4a, 4b.

Die erste und die zweite Griffeinrichtung 4a, 4b sind an einen Trägerkörper 4c angebunden und dieser Trägerkörper 4c trägt die Displayeinrichtung 5.

Die Displayeinrichtung 5 ist in einer Ausrichtung in den Einkaufswagen eingebunden, in welcher eine durch das Flächenzentrum Z des Displays 5 verlaufende und zur Displayhauptebene senkrechte Achse X eine Ausrichtung aufweist, die bei gebrauchsüblichem Aufgriff der Griffeinrichtung durch einen Anwender durchschnittlicher Größe dessen Kopfbereich erfasst. Die Displayeinrichtung 5 hat bei dem dargestellten Ausführungsbeispiel gegenüber einer Horizontalebene eine Neigung im Bereich von 30 bis 60°. Es ist möglich, die Anbindung der Displayeinrichtung so zu bewerkstelligen, dass die Ausrichtung der Displayeinrichtung einstellbar veränderbar ist.

Der in der Displayeinrichtung 5 wiedergegebene Bildinhalt kann auf komplexen Programmen beruhen, er kann offline generiert werden und dabei insbesondere lediglich unter Rückgriffnahme aus Inhalten abgeleitet werden, die in einer Schaltung abgelegt sind, die in die Griffeinrichtung eingebunden ist, der Bildinhalt kann auch durch anderweitige Kommunikation, insbesondere WLAN und Bluetooth- oder NFC-Datenübertragung abgestimmt werden.

Bei dem gezeigten Ausführungsbeispiel ist die gesamte für den Betrieb der Displayeinrichtung vorgesehene elektronische Schaltung einschließlich Akkueinrichtung in die Griffbaugruppe eingebunden. Neben der Schaltungseinrichtung ist hier auch und eine durch diese angesteuerte Projektionseinrichtung vorgesehen und diese beiden Einrichtungen sind wie nachfolgend in Verbindung mit Figur 2 noch vertieft werden wird in den Einkaufswagen eingebunden.

Der Einkaufswagen kann so ausgebildet sein, dass dieser eine Pfandschlosseinrichtung umfasst wobei ein Interaktionsvorgang zur Freigabe der Pfandschlosseinrichtung oder zur Pfandrückgabe in Verbindung mit Bildinhalten die über die Displayeinrichtung 5 wiedergegeben werden, visuell unterstützt wird. An der Griffeinrichtung 4 ist eine Smartphone-Aufnahmeeinrichtung 9 vorgesehen, zur Aufnahme eines Smartphones im Bereich der Griffeinrichtung. Weiterhin ist in der Griffeinrichtung 4 eine NFC-Schnittstelleneinrichtung vorgesehen, zur Abstimmung von Bildinhalten die über die Displayeinrichtung 5 wiedergegeben werden in Verbindung mit einem Signaltransfer zu und von dem in der Aufnahme 9 abgelegten (hier nicht dargestellten) Smartphone eines Anwenders.

Über die Displayeinrichtung 5 wird bei diesem Ausführungsbeispiel zudem eine Wiedergabe von Bildinhalten bewerkstelligt, die eine Augmented-Reality Funktion bieten im Zusammenspiel mit den im Warenaufnahmebereich aufgenommenen Waren oder der Raumgeometrie des Warenaufnahmebereiches.

Der erfindungsgemäße Einkaufswagen zeichnet sich insbesondere durch die als Griffeinrichtung fungierende Baugruppe aus. Diese Baugruppe umfasst einen ersten Griffabschnitt 4a, einen zweiten Griffabschnitt 4b, einen Trägerkörper 4c, der die beiden Griffabschnitte 4a, 4b trägt und die Displayeinrichtung 5, die sich in einem Zwischenbereich zwischen den beiden Griffabschnitten 4a, 4b erstreckt, wobei die Displayeinrichtung 5 durch einen transparenten Scheibenkörper gebildet ist, der nach Montage der Griffeinrichtung einen Durchblick in einen Warenaufnahmebereich des Einkaufswagens gestattet. Der Scheibenkörper bildet Bestandteil eines holgraphischen Displays.

Das Fahrgestell 3 umfasst Laufrollen 3a, 3b, wobei hier die vorderen Laufrollen 3a als Schlepprollen ausgebildet sind. Die Aufnahmestruktur 1 umfasst unterhalb der Griffeinrichtung eine Klappwand 1a, die bei Einschub eines Wagens in den Einkaufswagen nach oben aufzuschwenken vermag. Die Griffeinrichtung 4c kann eine Scharnierstruktur 1b für diese Klappwand 1a bereitstellen, so dass auch die Klappwand 1a über die Baugruppe der Griffeinrichtung in den Einkaufswagen eingebunden werden kann.

Wie aus der Darstellung nach Figur 2 ersichtlich, wird die Einbindung der Schaltungseinrichtung 6 und der Projektionseinrichtung 7 in den Einkaufswagen durch eine die Griffeinrichtung 4 tragende oder bereitstellende Struktur 4c bewerkstelligt. Durch die Schaltungseinrichtung 6 wird die Projektionseinrichtung 7 angesteuert. Das von der Projektionseinrichtung emittierte Licht wird an einem Spiegel 8 umgelenkt und auf die Rückseite des Scheibenkörpers 5 der Displayeinrichtung projiziert. Der Scheibenkörper ist mit einem holographischen Layer versehen.

Über die Displayeinrichtung 5 kann eine Navigationsunterstützung zum Auffinden von Waren bewerkstelligt werden, es können über die Displayeinrichtung auch Funktionen zur Abwicklung eines Self-Checkouts bereitgestellt werden.

Alternativ zu dem hier gezeigten Projektionskonzept kann die Einkoppelung der Bildinhalte in die Displayeinrichtung 5 auch durch Einkoppelung von Bildinhalten in einen Randseitenbereich der Displayeinrichtung 5 bewerkstelligt werden.

Gemäß einem weiteren Aspekt der vorliegenden Erfindung ist es möglich, über das dem Warenaufnahmebereich zugewandte Display eine holographische Kamera zu realisieren. Damit wird es möglich, im Rahmen des Einbringens von Waren in den Aufnahmebereich diese über optische Wirkung des Displays und die in Verbindung mit diesem Effekt realisierte Kamerafunktion zu erfassen, durch Bilderkennung zu identifizieren und dann insbesondere für einen Self-Checkout abzurechnen.

Der Scheibenkörper des Displays kann gemäß einem weiteren besonderen Aspekt der vorliegenden Erfindung zur Realisierung einer sog. Bifacialfunktion herangezogen werden. Er kann eine einseitige Displayfunktion und eine einseitige Kamerafunktion bieten. Er kann insbesondere auch eine zweiseitige Kamerafunktion bieten, so dass aufgrund der Ausrichtung und Positionierung der Displayeinrichtung im Zwischenbereich zwischen Anwender und Aufnahmebereich eine optische Erfassung des Anwenders und des Inhalts des Aufnahmebereiches ermöglicht wird.

Es ist möglich, im Display statische Bildinhalte vorzubereiten, insbesondere graphische Rahmenelemente, Navigationssymbole und insbesondere auch eine Tastaturdarstellung. Diese statischen Inhalte werden durch definierte Ansteuerung von Leuchtelementen temporär sichtbar. Über das Display kann eine Touchscreenfunktion realisiert werden, es ist auch möglich in Kombination hiermit oder alternativ hierzu eine berührungslose Erfassung von Gesten in einem Raumbereich vor oder hinter dem Display vorzunehmen. Dies kann auf optischem Wege oder in Verbindung mit anderweitigen Sensoren, insbesondere Näherungssensoren zur 2D oder 3D Gestenerfassung erfolgen.

Gemäß einem besonderen weiteren Aspekt der vorliegenden Erfindung ist es möglich, im Rahmen eines Einkaufs Waren in einer Ablage auszuwählen ohne diese physisch aufzugreifen und in den Wagen zu verbringen. Diese Waren oder Darstellungen derselben werden dann im Display visualisiert und im Rahmen des Bezahlvorganges separat an den Point-of-Sale verbracht. Dieser Ansatz eignet sich in besonders vorteilhafter Weise für den Einkauf raumfordernder Waren oder Waren von hohem Gewicht, wie insbesondere Getränkepackungen und Getränkekästen.

Die Bildinhalte des Displays können durch Drahtloskommunikationseinrichtungen abgestimmt werden. Festlegungen der Bildinhalte können hierbei in einem Mark oder einer anderweitigen externen Institution, insbesondere einer Marketingzentrale abgestimmt werden.

Für die Realisierung des Displays kann insbesondere auf die sog. Smart-Glas Technologie der Carl Zeiss AG zurückgegriffen werden.

Die Darstellung nach Figur 3 veranschaulicht den Aufbau eines Fachsystems 10 insbesondere eines sog. Bake-Off Moduls durch welches in frontal einsehbaren Fächern 11 Waren, insbesondere Backwaren zur Entnahme durch einen Anwender bereitgehalten werden. Bei diesem Bake-Off Modul, sind die frontal zugänglichen Warenfächer 11 jeweils mit einer Deckeleinrichtung 12 verschließbar. Diese Deckeleinrichtungen 12 sind beispielsweise durch Aufschwenken von einem Kunden in eine Offenstellung bringbar. Diese Deckeleinrichtungen 12 und/oder an diese angrenzende Abschnitte 13 bilden eine Displayeinrichtung, zur Wiedergabe von Bildinformationen. Erfindungsgemäß bildet bei diesem Bake-Off Modul die jeweils einem Warenfach zugeordnete Displayeinrichtung 12 eine transparente Struktur in Form eines Scheibenkörpers und ist derart angeordnet, dass diese einen Durchblick in den Innenbereich eines Warenfaches ermöglicht.

Die jeweilige Displayeinrichtung kann dabei mit Inhalten bespielt werden, die Werbung oder Hinweise zum jeweiligen Produkt oder anderweitig ansprechende Inhalte darstellen. Der Scheibenkörper 12 ist mit einem holographischen Layer versehen.

Das Bake-Off Modul ist hier als Fachsystem ausgebildet, das mehrere nebeneinanderliegend sowie übereinanderliegend angeordnete Fächer aufweist, die durch Trennwände voneinander getrennt sind und auf einer einem Anwender zugänglichen Systemseite Fachdeckel aufweisen die manuell oder automatisiert in eine Offenstellung verbringbar sind und dabei einen Zugriff zu dem Innenbereich des jeweiligen Warenfaches oder ein Hineingreifen mit einem Entnahmehilfsmittel wie z.B. einer Gebäckzange ermöglichen.

Wie aus der Darstellung nach Figur 4 ersichtlich kann hierbei insbesondere im oberen Bereich des jeweiligen Warenfaches eine schmale Leistenstruktur angeordnet werden, in welche eine Projektionseinrichtung 7 eingebunden ist. Die Einkoppelung der Bildinhalte durch diese Projektionseinrichtung 7 kann ggf. unter Einbindung einer Spiegeloptik 8 erfolgen, wobei der Projektionsweg so gewählt ist, dass dieser bei üblicher Füllung der Warenfächer mit Backwaren 14 nicht von den darin liegenden Waren, insbesondere Gebäckstücken unterbrochen wird. Die Projektionseinrichtung 7 und/oder die Spiegeloptik 8 kann sich insoweit insbesondere im Dachbereich des jeweiligen Warenfaches befinden und hierbei eine Projektion holografischer Bildinhalte auf die Rückseite der jeweiligen Fachklappe 12 oder Abdeckleiste d.h. auf die dem Anwenderabgewandte Rückseite der Fachklappe 12 oder Abdeckleiste "von schräg oben her" vornehmen.

Die Darstellung nach Figur 5 zeigt einen beispielhaften Aufbau einer Wagenstation 15 oder Wagenparkbox, die beispielsweise auf einem Kunden-Parkplatz bereitgestellt wird, wobei diese Wagenstation 15 eine überdachte und an wenigstens einer Seite von einer Seitenwandung 16 begrenzte Umhausung darstellt.

Bei dieser Wagenstation 15 bildet die Seitenwandung 16 zumindest partiell eine holografische Displayeinrichtung, zur Wiedergabe von Bildinformationen. Die Seitenwandung 16 bildet hierbei eine transparente Struktur in Form eines Scheibenkörpers und ist derart angeordnet, dass diese einen Durchblick in den Abstellbereich der Einkaufswagen 17 ermöglicht.

Die Einkoppelung der Bildinhalte in diese Seitenwandung 16 der Wagenstation 15 kann dabei insbesondere durch eine Projektionseinrichtung 7 bewerkstelligt werden, die im Dachbereich der Wagenstation und hierbei im Innenberiech, d.h. unter dem Dach 18 angeordnet ist und hierbei eine Projektion auf die Innenseite der Seitenwandung 16 ermöglicht. Der Scheibenkörper 16 ist mit einem holographischen Layer versehen.

Die Darstellung nach Figur 6 zeigt den Aufbau einer Gateeinrichtung 20 durch welche ein Zugang zu einem reglementierten Bereich, einem Verkaufsbereich oder ein Herausgehen aus einem Verkaufs- oder Bezahlbereich koordiniert werden kann, wobei diese Gateeinrichtung 20 ein Sperrorgan 22 mit einer Platteneinrichtung 21 umfasst die in eine Sperrstellung und in eine Freigabestellung bringbar, insbesondere um eine vertikale Achse X schwenkbar oder in Form einer Schiebetüre verschiebbar ist.

Bei dieser Gateeinrichtung 20 bildet das Sperrorgan 22 zumindest partiell eine Displayeinrichtung, zur Wiedergabe von Bildinformationen. Das Sperrorgan 22 bildet eine platten- oder Scheibenartige Fläche die zumindest abschnittsweise eine holografische Displayeinrichtung bildet. Das Sperrorgan 22 bildet hierbei eine transparente Struktur in Form eines Scheibenkörpers. Das Sperrorgan 22 ermöglicht hierbei einen Durchblick auf den Abschnitt des dem Anwender bezüglich des Sperrorgans abgewandten Abschnitt des Durchgangsweges. Der Scheibenkörper 21 ist mit einem holographischen Layer versehen.

Die Einkoppelung der Bildinhalte in dieses Sperrorgan kann hierbei wiederum insbesondere durch eine Projektionseinrichtung 7 bewerkstelligt werden, die in die Gateeinrichtung 20 integriert ist oder zu dieser derart positioniert ist, dass durch diese eine Projektion holografischer Bildinhalte auf das Sperrorgan 22 zumindest in der Schließstellung ermöglicht wird.

Bei den oben beschriebenen erfindungsgemäßen Ausführungsbeispielen erfolgt durch Integration von Projektionseinrichtungen eine Projektion holografischer Bildinhalte auf transparente oder transluzente Flächen. Es wird dabei insbesondere an bewegbaren Strukturen eine flexible Bespielung mit Inhalten, insbesondere auch dynamisch wechselnden Bildinhalten ermöglicht. Die dort verwendeten Scheibenelemente können auch Bestandteil anderweitiger Beleuchtungssysteme bilden oder aus weiteren Lichtquellen mit Licht beaufschlagt werden.

## Patentansprüche

1. Einkaufswagen mit:
- einer Aufnahmestruktur die einen zur Aufnahme von Waren vorgesehenen Aufnahmebereich definiert,
- einem Fahrgestell, das die Aufnahmestruktur trägt,
- einer Griffeinrichtung zur Bereitstellung eines ersten und eines zweiten, jeweils manuell aufgreifbaren Griffabschnitts und
- einer Displayeinrichtung zur Wiedergabe von Bildinformationen,
- wobei die Displayeinrichtung als transparente Struktur in Form eines Scheibenkörpers ausgebildet und derart angeordnet ist, dass diese einen Durchblick in den Aufnahmebereich ermöglicht,
und wobei die Displayeinrichtung als holographisches Display ausgebildet ist.

2. Einkaufswagen nach Anspruch 1, **dadurch gekennzeichnet, dass** eine Schaltungseinrichtung und eine durch diese angesteuerte Projektionseinrichtung vorgesehen ist und dass diese beiden Einrichtungen in den Einkaufswagen eingebunden sind.

3. Einkaufswagen nach wenigstens einem der Ansprüche 1 oder 2, **dadurch gekennzeichnet, dass** der Einkaufswagen eine Pfandschlosseinrichtung umfasst und dass ein Interaktionsvorgang zur Freigabe der Pfandschlosseinrichtung oder zur Pfandrückgabe in Verbindung mit der Displayeinrichtung visuell unterstützt wird.

4. Einkaufswagen nach wenigstens einem der Ansprüche 1 bis 3, **dadurch gekennzeichnet, dass** eine Smartphone-Aufnahmeeinrichtung vorgesehen ist zur Aufnahme eines Smartphones im Bereich der Griffeinrichtung und dass eine Schnittstelleneinrichtung vorgesehen ist, zur Abstimmung von Bildinhalten, die über die Displayeinrichtung wiedergegeben werden in Verbindung mit einem Signaltransfer zu und von dem Smartphone.

5. Einkaufswagen nach wenigstens einem der Ansprüche 1 bis 4, **dadurch gekennzeichnet, dass** über die Displayeinrichtung eine Wiedergabe von Bildinhalten bewerkstelligt wird, die eine Augmented-Reality Funktion bieten im Zusammenspiel mit den im Warenaufnahmebereich aufgenommenen Waren oder der Raumgeometrie des Warenaufnahmebereiches.

6. Einkaufswagen nach wenigstens einem der Ansprüche 1 bis 5, **dadurch gekennzeichnet, dass** über die Displayeinrichtung eine Navigationsunterstützung zum Auffinden von Waren bewerkstelligt wird.

7. Einkaufswagen nach wenigstens einem der Ansprüche 1 bis 6, **dadurch gekennzeichnet, dass** über die Displayeinrichtung Funktionen zur Abwicklung eines Self-Checkouts bereitgestellt werden.

8. Griffeinrichtung für einen Einkaufswagen mit einem ersten Griffabschnitt, einem zweiten Griffabschnitt, einem Trägerkörper der die beiden Griffabschnitte trägt und einer Displayeinrichtung die sich in einem Zwischenbereich zwischen den beiden Griffabschnitten erstreckt, wobei die Displayeinrichtung durch einen transparenten Scheibenkörper gebildet ist, der einen Durchblick in einen Warenaufnahmebereich des Einkaufswagens gestattet.

9. Griffeinrichtung nach Anspruch 8, **dadurch gekennzeichnet, dass** der Scheibenkörper Bestandteil eines holgraphischen Displays bildet.

10. Fachsystem insbesondere Bake-Off Modul, zur Bereitstellung von Backwaren in frontal zugänglichen Warenfächern die jeweils mit einer Deckeleinrichtung verschließbar sind und die von einem Kunden in eine Offenstellung bringbar sind, wobei diese Deckeleinrichtungen und/oder an diese angrenzende Abschnitte eine Displayeinrichtung bilden, zur Wiedergabe von Bildinformationen.

11. Fachsystem nach Anspruch 10, **dadurch gekennzeichnet, dass** bei diesem die jeweils einem Warenfach zugeordnete Displayeinrichtung eine transparente Struktur in Form eines Scheibenkörpers bildet und derart angeordnet ist, dass diese einen Durchblick in den Innenbereich eines Warenfaches ermöglicht.

12. Wagenstation, insbesondere überdachte und wenigstens einseitig von einer Seitenwandung begrenzte Umhausung zur Bereitstellung von Einkaufswagen, wobei die Seitenwandung dieser Wagenstation zumindest partiell eine Displayeinrichtung bildet, zur Wiedergabe von Bildinformationen.

13. Wagenstation nach Anspruch 12, **dadurch gekennzeichnet, dass** dieser Wagenstation die wenigstens eine Seitenwandung zumindest abschnittsweise eine holografische Displayeinrichtung bildet die durch eine transparente Struktur in Form eines Scheibenkörpers gebildet und derart angeordnet ist, dass diese einen Durchblick in den Abstellbereich der Einkaufswagen ermöglicht.

14. Gateeinrichtung mit einem plattenartigen Sperrorgan, wobei dieses Sperrorgan zumindest partiell eine Displayeinrichtung bildet, zur Wiedergabe von Bildinformationen.

15. Gateeinrichtung nach Anspruch 14, **dadurch gekennzeichnet, dass** bei dieser Gateeinrichtung das Sperrorgan eine platten- oder scheibenartige Fläche bereitstellt, die zumindest abschnittsweise eine holografische Displayeinrichtung bildet und dass das Sperrorgan einen Durchblick auf den Abschnitt des dem Anwender bezüglich des Sperrorgans abgewandten Abschnitts des Durchgangsweges ermöglicht.
